# EUROPÄISCHE PATENTSCHRIFT

(11) **EP 0 921 044 B1**
(45) Veröffentlichungstag und Bekanntmachung des Hinweises auf die Patenterteilung: **16.03.2005**
(21) Anmeldenummer: 98122549.3
(22) Anmeldetag: 02.12.1998
(51) Int. Cl.: B60R 21/20

(54) **Gassack-Modul für ein Fahrzeuginsassen-Rückhaltesystem**
Airbag module for an airbag restraining system
Module de coussin gonflable pour système de retenue de passager d'un véhicule

(30) Priorität: 08.12.1997 DE 29721644 U
(43) Veröffentlichungstag der Anmeldung: 09.06.1999
(73) Patentinhaber: TRW Automotive GmbH, 73553 Alfdorf (DE)
(72) Erfinder: Heilig, Alexander, 73550 Wissgoldingen (DE)
(74) Vertreter: Sties, Jochen, Dipl.-Ing.

(56) Entgegenhaltungen:
- EP-A- 0 811 532
- US-A- 5 344 184
- US-A- 5 431 433
- US-A- 5 662 355

## Beschreibung

Die Erfindung betrifft ein Gassack-Modul für ein Fahrzeuginsassen-Rückhaltesystem, mit einem Gehäuse, einem in diesem angeordneten Gassack, einem Gasgenerator zum Befüllen des Gassacks mit Druckgas und einer Abdeckung, die das Gehäuse gegenüber dem Fahrzeuginnenraum verschließt und nach Aktivierung des Gasgenerators geöffnet wird, um ein Austreten des Gassacks aus dem Gehäuse zu ermöglichen.

Bei herkömmlichen Gassack-Modulen wird die Abdeckung nach der Aktivierung des Gasgenerators durch die Kraft geöffnet, die der mit dem Druckgas beaufschlagte und sich entfaltende Gassack auf die Abdeckung ausübt. Da die Abdeckung des Gassack-Moduls beim normalen Betrieb des Fahrzeugs möglichst nicht sichtbar sein soll, ist auf der vom Fahrzeuginnenraum aus sichtbaren Seite der Abdeckung üblicherweise eine durchgehende Materialschicht ausgebildet, die mit Sollbruchstellen versehen ist. Zum Öffnen der Abdeckung muß erst die durchgehende Materialschicht überwunden werden. Hieraus resultiert, daß sich nach der Aktivierung des Gasgenerators im Inneren des Gassacks erst ein vergleichsweise hoher Druck aufbauen muß, bevor die durchgehende Materialschicht nachgibt und sich die Abdeckung öffnen kann, so daß sich der Gassack im Fahrzeuginnenraum entfalten kann. Dieser Druck, der vor dem Öffnen der Abdeckung erreicht wird, ist sehr viel höher als der Druck, der sich während des nachfolgenden Entfaltens des Gassacks in dessen Inneren einstellt. Dieser übermäßig hohe Druck vor Beginn des Öffnens der Abdeckung hat sich als in vielerlei Hinsicht nachteilig herausgestellt. Aus dem hohen Druck resultieren hohe Kontaktkräfte zwischen dem Gassack und der Abdeckung, weshalb besondere Vorkehrungen getroffen werden müssen, daß der die Abdeckung aufreißende Gassack nicht von der Abdeckung beschädigt wird. Außerdem ist der anfänglich übermäßig hohe Druck nachteilig für die Art und Weise, wie sich der Gassack im Fahrzeuginnenraum entfaltet und positioniert.

Die Erfindung schafft ein Gassack-Modul, bei dem nach dem Zünden des Gasgenerators und vor dem Öffnen der Abdeckung kein übermäßig hoher Druck im Gassack aufgebaut wird. Dies wird gemäß der Erfindung bei einem Gassack-Modul der eingangs genannten Art dadurch erzielt, daß ein mit der Abdeckung gekoppeltes, von dieser aber räumlich getrenntes Abstützelement vorgesehen ist, das nach Aktivierung des Gasgenerators einer Kraft ausgesetzt wird, die aus dem vom Gasgenerator erzeugten Druckgas resultiert und die Abdeckung in die geöffnete Stellung beaufschlagt, und daß die Abdeckung mittels einer Schwenkplatte um eine sich in der Längsrichtung des Moduls erstreckende Schwenkachse schwenkbar am Gehäuse angebracht ist. Die Abdeckung wird also mittels des zusätzlich vorgesehenen Abstützelementes geöffnet; dieses kann an einer beliebigen geeigneten Stelle im Gassack-Modul angeordnet werden, an der der notwendige Raum zur Verfügung steht und die zu besseren Hebelverhältnissen beim Öffnen führt.

Das Öffnen der Abdeckung wird nämlich erleichtert, wenn diese nicht mittels einem ihrer Längsränder mit dem Gehäuse gekoppelt ist und folglich um diesen schwenkt, sondern mittels eines zusätzlich vorgesehenen Bauteils mit dem Gehäuse verbunden ist. Auf diese Weise kann nämlich der Radius, um den die Abdeckung beim Öffnen schwenkt, vergrößert werden, was sich aufgrund des längeren Hebelarms, der zur Verfügung steht, vorteilhaft auf die zum Öffnen der Abdeckung erforderlichen Kräfte auswirkt. Außerdem läßt sich eine vorteilhaftere Bewegungsbahn der Abdeckung erzielen.

Vorzugsweise ist weiterhin vorgesehen, daß das Abstützelement an der Schwenkplatte angebracht ist. Alternativ kann vorgesehen sein, daß das Abstützelement Teil der Schwenkplatte ist. Die aus dem vom Gasgenerator erzeugten Druckgas resultierende und auf das Abstützelement einwirkende Kraft kann auf diese Weise direkt in die Schwenkplatte eingeleitet werden, mit der auch die Abdeckung verbunden ist, so daß die Abdeckung ohne Kraftverluste geöffnet wird.

Vorzugsweise ist weiterhin vorgesehen, daß die Schwenkplatte außerhalb des Gehäuses angebracht ist und das Abstützelement durch einen Durchbruch der Wand des Gehäuses in dieses hineinragt. Auf diese Weise ergibt sich eine besonders kompakte Gestaltung des Gassack-Moduls, und die nach Aktivierung des Gasgenerators auf das Abstützelement wirkende Kraft resultiert aus der Differenz zwischen dem im Inneren des Gehäuses herrschenden Druck und dem außerhalb des Gehäuses herrschenden Druck.

Vorzugsweise ist ferner zwischen dem Gasgenerator und dem Gassack eine Absperrung vorgesehen, die unmittelbar nach Aktivierung des Gasgenerators ein Eintreten des von diesem erzeugten Druckgases in den Gassack verhindert. Auf diese Weise wird gewährleistet, daß der Gassack nach der Aktivierung des Gasgenerators zunächst, abgesehen von kleinen Leckströmen durch die Absperrung hindurch, überhaupt nicht mit dem erzeugten Druckgas beaufschlagt wird. Das Druckgas wird daher anfänglich vollständig nur dazu verwendet, die Abdeckung zu öffnen. Zum Zeitpunkt des Öffnens der Abdeckung ist der Gassack immer noch vollständig oder zumindest nahezu drucklos, so daß die oben erwähnten Probleme bei Gassackmodulen aus dem Stand der Technik, bei denen der unter hohem Druck stehende Gassack sich an der noch geschlossenen oder gerade öffnenden Abdeckung abstützt, nicht auftreten. Erst nachdem die Abdeckung des erfindungsgemäßen Gassack-Moduls vollständig oder zu einem wesentlichen Teil geöffnet ist, wird die Absperrung überwunden, und der Gassack wird mit Druckgas befüllt.

Vorzugsweise ist weiterhin vorgesehen, daß als Teil der Absperrung eine zwischen dem Gasgenerator und dem Gassack angeordnete Trennwand verwendet wird, die mit mindestens einer Durchgangsöffnung versehen ist, und daß die Durchgangsöffnung im Ausgangszustand mit geschlossener Abdeckung verschlossen und im aktivierten Zustand mit geöffneter Abdeckung freigegeben ist. Diese Trennwand kann zusätzlich zu ihrer Funktion als Teil der Absperrung auch zur Versteifung des Gehäuses verwendet werden. Es ist auch möglich, als Trennwand ein Rahmenteil zu verwenden, das bei manchen Gasgeneratoren in den oberen Teil des Gehäuses eingelegt wird und zur Befestigung des Gassacks am Gehäuse dient.

Als Teil der Absperrung kann weiterhin beispielsweise ein Schieberelement, eine Berstmembran oder ein Gewebeteil vorgesehen sein, von denen jedes im Ausgangszustand, also kurz nach Aktivierung des Gasgenerators, ein Strömen von Druckgas vom Gasgenerator in den Gassack verhindert. Das Schieberelement und die Berstmembran sind vorzugsweise in direktem Kontakt mit der Trennwand ausgeführt, wohingegen das Gewebeteil beabstandet von der Trennwand verwendet werden kann.

Vorzugsweise ist weiterhin vorgesehen, daß die Schwenkachse im Bereich des Bodens des Gehäuses angeordnet ist. Weiter vorteilhaft ist, wenn die Schwenkachse in der Mittellängsebene des Gehäuses angeordnet ist. Bei dieser Gestaltung ergibt sich eine besonders vorteilhafte Bewegungsbahn der Abdeckung, da diese beim Öffnen nach außen und unten wegtaucht, also unter die sie umgebenden Bereiche beispielsweise eines Armaturenbretts verschwindet. Im Gegensatz zu den aus dem Stand der Technik bekannten Abdeckungen, die sich in Richtung des Fahrzeuginsassen öffnen, ergibt sich keine Anschußgefahr für den Fahrzeuginsassen.

Vorzugsweise ist schließlich vorgesehen, daß das Abstützelement so angeordnet ist, daß es der aus dem vom Gasgenerator erzeugten Druckgas resultierenden Kraft entlang einer Richtung ausgesetzt ist, die zumindest annähernd parallel zur Erstreckungsrichtung der Abdeckung im geschlossenen Zustand ist. Auf diese Weise wird die aus dem Druckgas resultierende Kraft optimal in die Öffnungsbewegung der Abdeckung umgesetzt. Dies stellt einen wesentlichen Unterschied zum Stand der Technik dar, bei dem die Abdeckung, wenn sie geöffnet werden soll, üblicherweise mit einer Kraft beaufschlagt wird, die wenigstens zu Beginn der Öffnungsbewegung senkrecht zur Abdeckung wirkt.

Vorteilhafte Ausgestaltungen der Erfindung ergeben sich aus den Unteransprüchen.

Die Erfindung wird nachfolgend anhand bevorzugter Ausführungsformen beschrieben, die in den beigefügten Zeichnungen dargestellt sind. In diesen zeigen:
- Figur 1 eine Querschnittsansicht eines erfindungsgemäßen Gassack-Moduls gemäß einer ersten Ausführungsform im Ruhezustand;
- Figur 2 in einer Querschnittsansicht das Gassack-Modul von Figur 1 in einem Zustand nach Aktivierung des Gasgenerators und vor dem Entfalten des Gassacks;
- Figur 3 das Gassack-Modul von Figur 1 im Zustand mit entfaltetem Gassack;
- Figur 4 in einer teilgeschnittenen Seitenansicht das Gassack-Modul von Figur 1;
- die Figuren 5 bis 7 in einer Querschnittsansicht ein erfindungsgemäßes Gassack-Modul gemäß einer zweiten Ausführungsform im Ruhezustand, nach der Aktivierung des Gasgenerators bzw. mit entfaltetem Gassack;
- die Figuren 8 bis 10 in einer Querschnittsansicht ein erfindungsgemäßes Gassack-Modul gemäß einer dritten Ausführungsform im Ruhezustand, nach der Aktivierung des Gasgenerators bzw. mit entfaltetem Gassack;

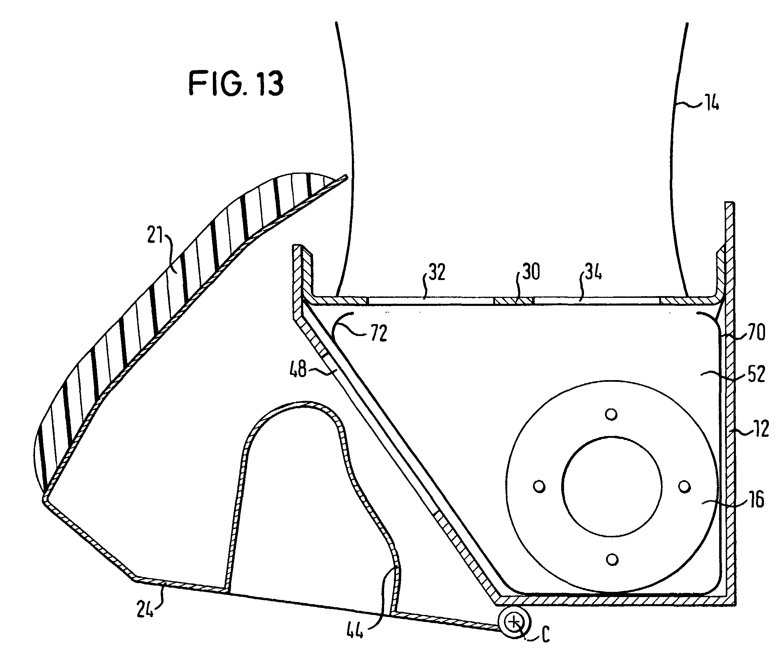

- die Figuren 11 bis 13 in einer Querschnittsansicht ein erfindungsgemäßes Gassack-Modul gemäß einer vierten Ausführungsform im Ruhezustand, nach der Aktivierung des Gasgenerators bzw. mit entfaltetem Gassack;
- die Figuren 14 bis 16 in einer Querschnittsansicht ein erfindungsgemäßes Gassack-Modul gemäß einer fünften Ausführungsform im Ruhezustand, nach der Aktivierung des Gasgenerators bzw. mit entfaltetem Gassack; und
- die Figuren 17 bis 20 in einer Seiten- bzw. Querschnittsansicht ein erfindungsgemäßes Gassack-Modul gemäß einer sechsten Ausführungsform im Ruhezustand, nach der Aktivierung des Gasgenerators bzw. mit entfaltetem Gassack.

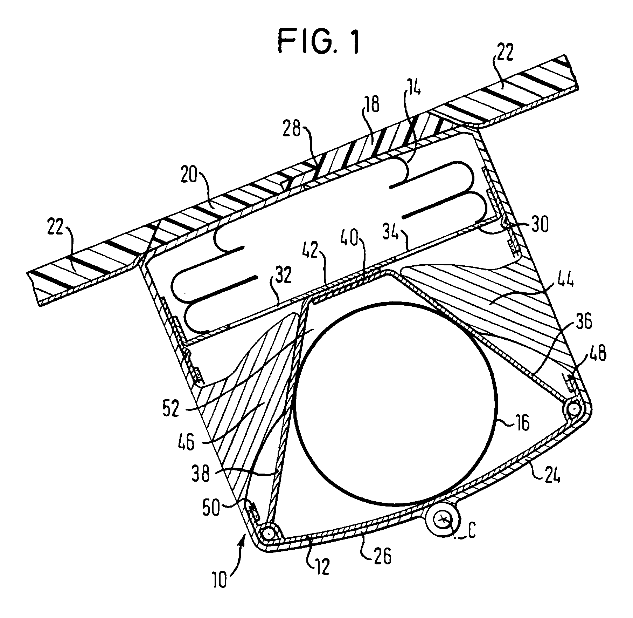

In Figur 1 ist in einer Querschnittsansicht ein Gassack-Modul 10 gemäß einer ersten Ausführungsform der Erfindung dargestellt. Das Gassack-Modul besteht allgemein aus einem Gehäuse 12, einem in diesem angeordneten Gassack 14, einem Gasgenerator 16 zum Befüllen des Gassacks 14 mit Druckgas und einer Abdeckung, die aus zwei Teilelementen 18, 20 besteht und den Gassack 14 abdeckt. Das Gassack-Modul 10 ist in einem Fahrzeug so angebracht, daß die Abdeckung 18, 20 bündig mit beispielsweise einem Armaturenbrett 22 abschließt. Der Gassack 14 kann mittels des vom Gasgenerator 16 nach dessen Aktivierung bereitgestellten Druckgases derart entfaltet werden, daß er sich im Fahrzeuginnenraum positioniert und eine Rückhaltewirkung für einen Fahrzeuginsassen bereitstellt.

Die Teilelemente 18, 20 der Abdeckung sind jeweils über eine Schwenkplatte 24, 26 schwenkbar am Gehäuse 12 angelenkt, wobei sich die Schwenkachse C in der Mittellängsebene des Gassack-Moduls parallel zu dessen Längsachse entlang dem Boden des Gehäuses erstreckt. Jede Schwenkplatte 24, 26 hat ein U-förmiges Profil und verläuft ausgehend von der Schwenkachse C entlang dem Boden des Gehäuses 12 auf dessen Außenseite nach außen zur unteren Längskante des Gehäuses, von dort ausgehend entlang der Seitenwand des Gehäuses nach oben und anschließend entlang der Unterseite des entsprechenden Teilelements 18, 20 der Abdeckung zur Mittellängsebene des Gassack-Moduls hin. Das entsprechende Teilelement 18, 20 der Abdeckung ist fest mit dem auf der Oberseite des Gehäuses verlaufenden Abschnitt der Schwenkplatte 24, 26 verbunden. Die beiden Teilelemente 18, 20 der Abdeckung liegen im Bereich der Mittellängsebene des Gassack-Moduls aneinander an, wobei ein stufenartiger Kontaktabschitt 28 vorgesehen ist.

Im Inneren des Gehäuses ist zwischen dem Bereich, in welchem der Gasgenerator 16 angeordnet ist, und dem Bereich, in welchem der gefaltete Gassack 14 angeordnet ist, eine Trennwand 30 angeordnet. Diese Trennwand ist mit den Seitenwänden des Gehäuses verbunden und kann dazu verwendet werden, den Gassack 14 am Gehäuse 12 anzubringen. Die Trennwand 30 ist mit zwei Durchgangsöffnungen 32, 34 versehen, die zum Innenraum des Gassacks 14 führen.

Am Boden des Gehäuses 12 sind entlang den Seitenrändern Schieberplatten 36, 38 verschwenkbar angebracht. Diese Schieberplatten erstrecken sich im Ruhezustand schräg im Inneren des Gehäuses am Gasgenerator 16 vorbei hin zur Trennwand 30, wobei am vom Boden des Gehäuses 12 abgewandten Ende jeder Schieberplatte 36, 38 ein Schieberelement 40, 42 vorgesehen ist, das plattenartig ausgebildet und von der entsprechenden Schieberplatte 36, 38 so abgewinkelt ist, daß es sich parallel zur Trennwand 30 erstreckt. Der Boden des Gehäuses 12, die Schieberplatten 36, 38 und die Schieberelemente 40, 42 bilden zusammen mit den Stirnseiten des Gehäuses eine im Ruhezustand abgeschlossene Arbeitskammer, in welcher der Gasgenerator 16 angeordnet ist.

An der vom Gasgenerator 16 abgewandten Seite jeder Schieberplatte 36, 38 liegt ein Abstützelement 44, 46 an, der als einteilig mit der entsprechenden Schwenkplatte 24, 26 ausgeführter Vorsprung ausgebildet ist. Jedes Abstützelement erstreckt sich von der Außenseite des Gehäuses, auf welcher die Schwenkplatten 24, 26 angeordnet sind, in das Innere des Gehäuses hinein in Berührung mit den Schieberplatten 36, 38 durch Durchbrüche 48, 50 hindurch, die in den Seitenwänden des Gehäuses ausgebildet sind.

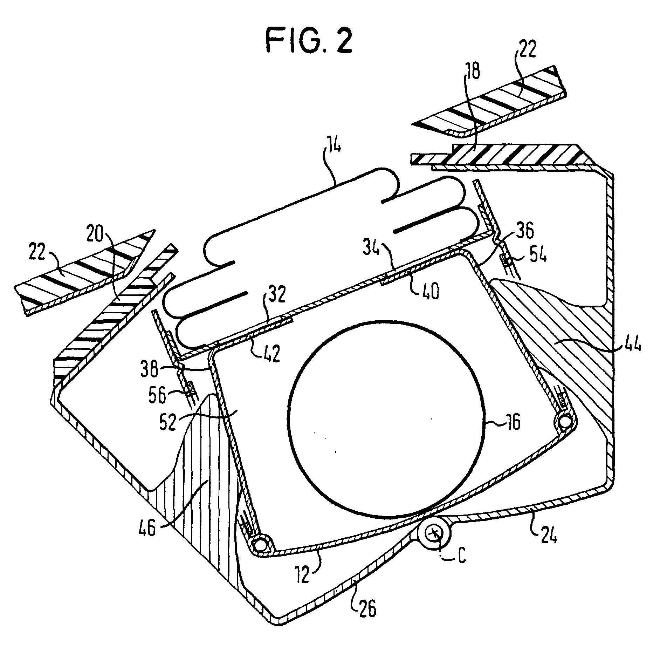

Wenn ausgehend vom Ruhezustand der Gasgenerator 16 aktiviert wird, wird zuerst die vom Boden des Gehäuses 12, den Schieberplatten 36, 38 und den Schieberelementen 40, 42 gebildete Arbeitskammer 52 unter Druck gesetzt. Ein Einströmen des bereitgestellten Druckgases in den Gassack 14 ist in diesem Zustand nicht möglich. Der sich in der Arbeitskammer 52 einstellende Druck bewirkt, daß die Schieberplatten 36, 38 jeweils zur Seitenwand des Gehäuses hin nach außen verschwenkt werden. Dabei gleiten die Schieberelemente 40, 42 in dichter Weise aufeinander und auf der Trennwand 30, so daß die Arbeitskammer 52 weiterhin abgeschlossen ist. In Figur 2 ist ein solcher Zustand mit nach außen verschwenkten Schieberplatten 36, 38 gezeigt, die in diesem Zustand parallel zu den Seitenwänden des Gehäuses verlaufen und daher eine optimale Umsetzung des in der Arbeitskammer 52 herrschenden Drucks in eine Öffnungskraft für die Abdeckung gewährleisten. Die Schieberelemente 40, 42 liegen an der Trennwand 30 im Bereich der Durchgangsöffnungen 32, 34 an. Bei ihrer Schwenkbewegung nach außen drücken die Schieberplatten 36, 38 die Abstützelemente 44, 46 nach außen, wobei diese die Schwenkplatten 24, 26 und dabei die Teilelemente 18, 24 der Abdeckung mitnehmen. Aufgrund der Anordnung der Schwenkachse C im Bereich des Bodens des Gehäuses 12 können die Teilelemente 18, 20 der Abdeckung unter das Armaturenbrett wegtauchen. Eine Anschußgefahr für einen Fahrzeuginsassen besteht somit nicht mehr. Es wird besonders darauf hingewiesen, daß in dem in Figur 2 gezeigten Zustand des Gassack-Moduls die Abdeckung 18, 20 vollständig geöffnet ist, bevor der Gassack 14 mit Druckgas beaufschlagt wird.

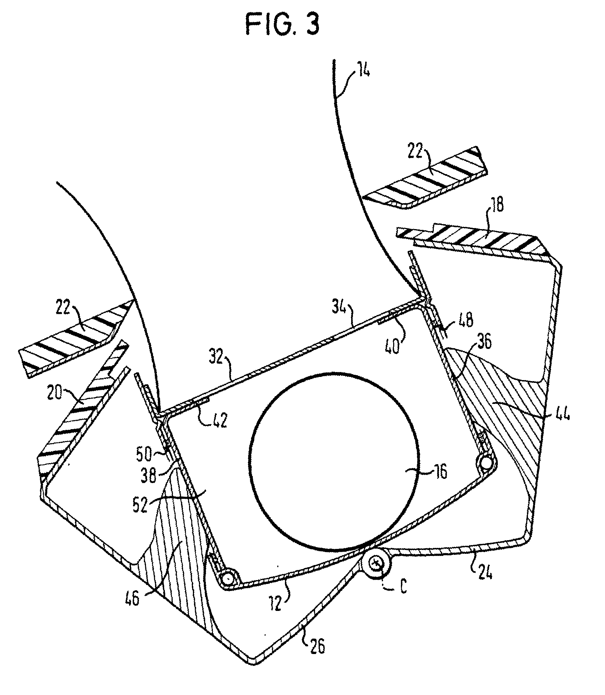

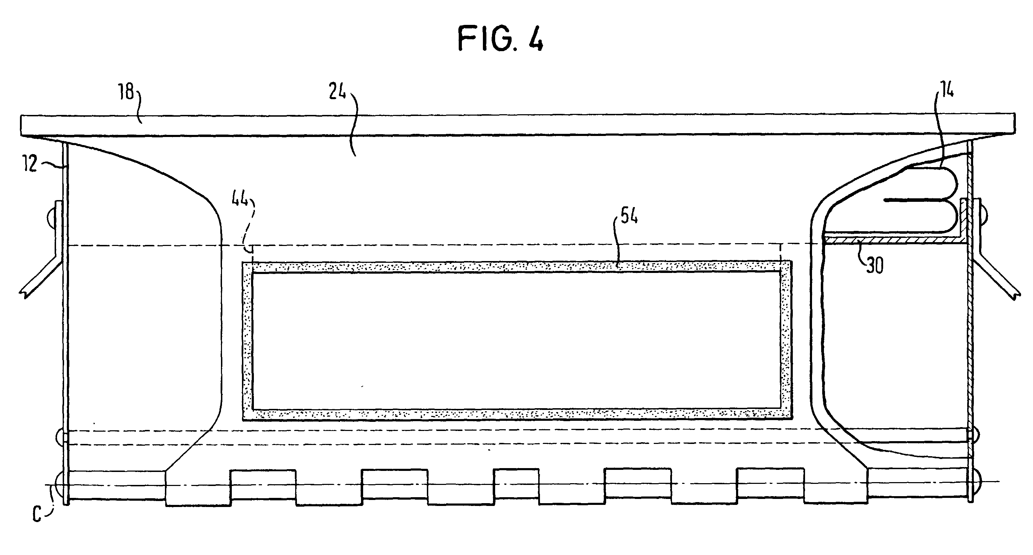

In Figur 3 ist der Zustand des Gassack-Moduls von Figur 2 gezeigt, nachdem die Schieberplatten 36, 38 unter der Wirkung des in der Arbeitskammer 52 erzeugten Drucks vollständig zu den Seitenwänden des Gehäuses 10 hin verschwenkt wurden. In dieser Stellung haben die Schieberelemente 40, 42 die Durchgangsöffnungen 32, 34 freigegeben, so daß das von dem Gasgenerator 16 erzeugte Druckgas aus der Arbeitskammer 52 in den Gassack 14 einströmen und diesen entfalten kann. Zur besseren Abdichtung der Arbeitskammer 52 sind entlang dem Umfang jedes Durchbruchs 48, 50 in der Seitenwand des Gehäuses 12 Dichtungen 54, 56 vorgesehen (siehe auch Figur 4).

Das Abstützelement 44, 46 kann entweder einstückig mit der entsprechenden Schwenkplatte 24, 26 ausgeführt sein, beispielsweise bei einer Schwenkplatte aus Kunststoff als Vorsprung oder bei einer Schwenkplatte aus Metall als Biegevorsprung, oder als separates Teil ausgeführt und an der Schwenkplatte befestigt sein.

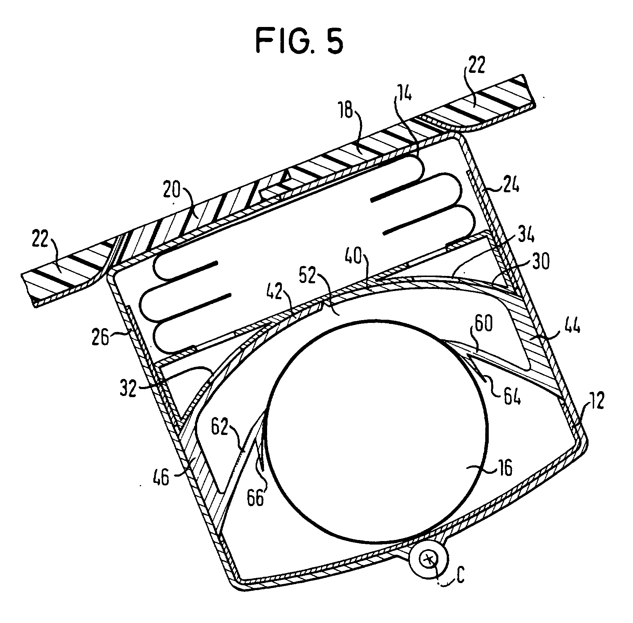

In den Figuren 5 bis 7 ist eine zweite Ausführungsform des erfindungsgemäßen Gassack-Moduls gezeigt. Da der Aufbau und die Funktionsweise des Gassack-Moduls gemäß der zweiten Ausführungsform weitgehend denjenigen der ersten Ausführungsform entsprechen, wird nachfolgend nur auf die Unterschiede zwischen den beiden Ausführungsformen eingegangen. Bauelemente der zweiten Ausführungsform, die Bauelementen mit gleicher Funktion der ersten Ausführungsform entsprechen, sind mit denselben Bezugszeichen bezeichnet.

Die Trennwand 30 ist bei der zweiten Ausführungsform gekrümmt ausgeführt, wobei der Krümmungsmittelpunkt etwa mit der Schwenkachse C zusammenfällt. Ferner sind die Schieberelemente 40, 42 in gleicher Weise gekrümmt ausgeführt, so daß sich eine flächige Berührung zwischen den Schieberelementen und der Trennwand ergibt. Zusätzlich ist an jedem Abstützelement 40, 42 ein Abdichtelement 60, 62 vorgesehen, das im Ruhezustand an der Außenwandung des Gasgenerators 16 anliegt und zusammen mit den Abstützelementen 44, 46 und den Schieberelementen 40, 42 die Arbeitskammer 52 bildet. Im Bereich seines am Gasgenerator 16 anliegenden Endes ist jedes Abdichtelement 60, 62 mit einem Anschlag 64, 66 versehen, der zum Begrenzen des Verschwenkens der Schwenkplatten 24, 26 vorgesehen ist.

Nach Aktivierung des Gasgenerators wird zuerst die Arbeitskammer 52 mit dem vom Gasgenerator 16 bereitgestellten Druckgas beaufschlagt. Da die Schieberelemente 40, 42 die Durchgangsöffnungen 32, 34 in der Trennwand 30 verschließen, beaufschlagt der in der Kammer 52 herrschende Druck die Abstützelemente 44, 46 nach außen, wodurch die Abdeckung 18, 20 geöffnet wird.

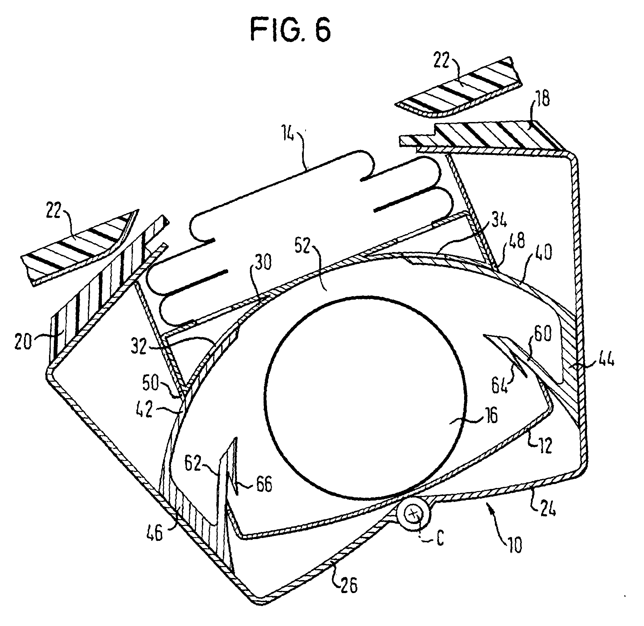

In Figur 6 ist das Gassack-Modul 10 in dem Zustand gezeigt, in welchem die Schieberelemente 40, 42 die Durchgangsöffnungen 32, 34 in der Trennwand 30 noch verschließen. Die Abdeckung 18, 20 ist bereits vollständig geöffnet, ohne daß der Gassack 14 mit Druckgas beaufschlagt wird. Die Abdichtelemente 60, 62 verschließen durch Anlage an den Durchbrüchen 48, 50 die Arbeitskammer 52 in dichter Weise.

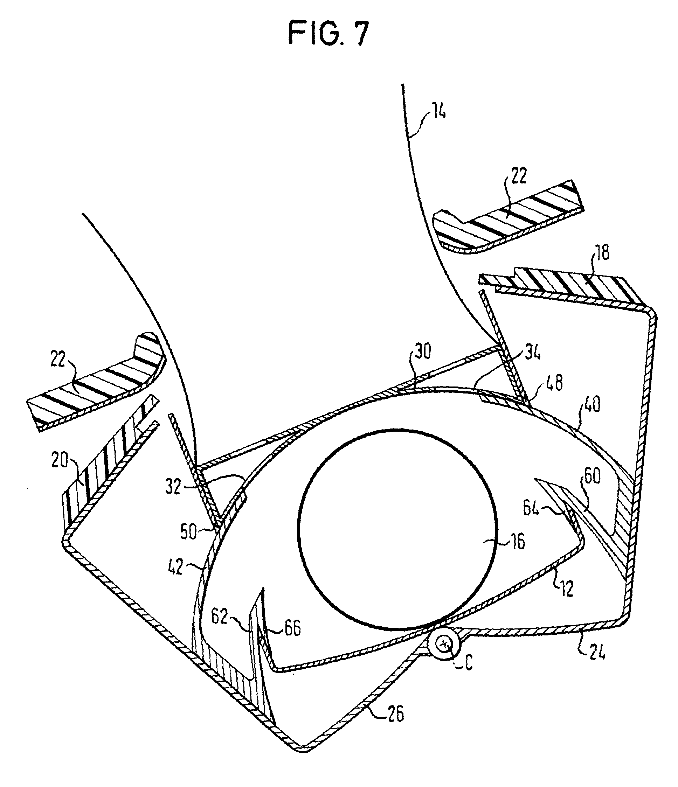

In Figur 7 ist das Gassack-Modul 10 im Zustand mit vollständig nach außen geschwenkten Schwenkplatten 24, 26 und entfaltetem Gassack 14 gezeigt. Die Anschläge 64, 66 der Abdichtelemente 60, 62 greifen am unteren Rand jedes Durchbruchs 48, 50 an und begrenzt somit die Verschwenkbarkeit nach außen. Die Arbeitskammer 52 ist in jeder Stellung des Schwenkplatten 24, 26 durch die Anlage der Abdichtelemente 60, 62 am unteren Rand der Durchbrüche 48, 50 sowie der Anlage der Schieberelemente 40, 42 an der Trennwand 30 abgedichtet, so daß kein Druckverlust nach außen hin auftreten kann.

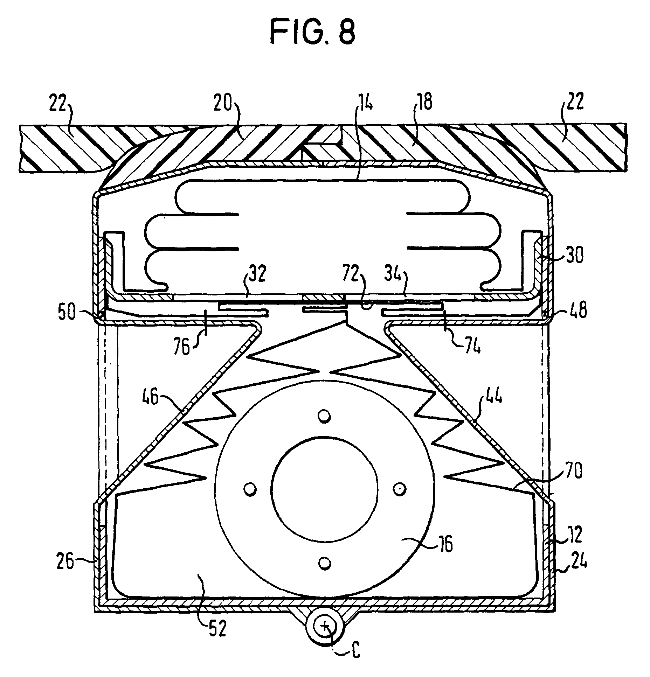

In Figur 8 ist ein erfindungsgemäßes Gassack-Modul gemäß einer dritten Ausführungsform gezeigt. Auch hier werden lediglich die Unterschiede zur ersten Ausführungsform des Gassack-Moduls beschrieben, und die verwendeten Bezugszeichen entsprechen den aus den vorhergehenden Figuren bekannten.

Bei der zweiten Ausführungsform ist die Arbeitskammer 52 durch einen ersten und einen zweiten Gewebelappen 70, 72 gebildet, die um den Gasgenerator 16 herum angeordnet sind. Der erste Gewebelappen 70 erstreckt sich ausgehend von der Trennwand 30 entlang der Schwenkplatte 24, über das an dieser ausgebildete Abstützelement 44, entlang dem Boden des Gehäuses 12 und schließlich entlang dem Abstützelement 46 und der Schwenkplatte 26 wieder zur Trennwand 30 hin. Der zweite Gewebelappen 72 erstreckt sich zwischen zwei Fixierungsstellen 74, 76, an den Schwenkplatten 24, 26. Der erste Gewebelappen 70 kann einteilig mit dem Gassack 14 ausgeführt werden, wobei dann die Trennwand 30 in dessen Innenraum angeordnet und mit dem Gehäuse 12 verbunden werden muß. Der erste und der zweite Gewebelappen 70, 72 bilden zusammen einen Steuergassack, in dessen Innenraum der Gasgenerator 16 angeordnet ist.

Die Abstützelemente weisen bei dieser Ausführungsform einen Bereich auf, an dem sich der Gewebelappen 70 direkt abstützt, wenn er mit Druckgas beaufschlagt wird. Dieser Bereich ist gebildet von dem von der Seitenwand des Gehäuses schräg nach oben und zur Mitte des Gehäuses hin verlaufenden Abschnitt jedes Abstützelementes 44, 46.

Nach Aktivierung des Gasgenerators 16 wird die von dem ersten und dem zweiten Gewebelappen 70, 72 gebildete Arbeitskammer 52 mit Druckgas beaufschlagt. Dabei stützt sich der erste Gewebelappen 70 an den Abstützelementen 44, 46 ab und versucht, diese aus dem Gehäuse herauszudrücken. Durch den schrägen Verlauf des Bereichs, an dem sich der Gewebelappen 70 an jedem Abstützelement abstützt, ergibt sich eine Art von Keilwirkung des zur Abdeckung hin schiebenden Gewebeteils 70 an den Abstützelementen, die das Öffnen der Abdeckung unterstützt. Beim Verschwenken der Schwenkplatten 24, 26 werden die Teilelemente 18, 20 der Abdeckung unter das Armaturenbrett 22 verschwenkt.

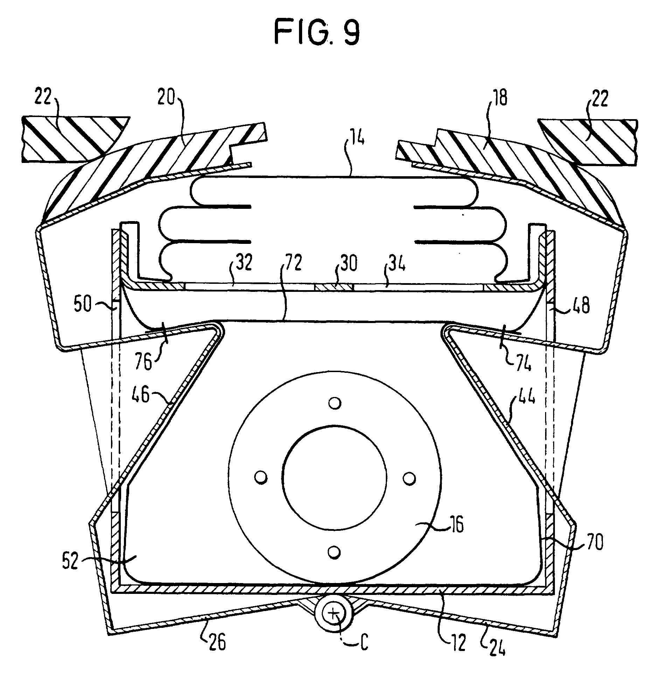

Wie in Figur 9 zu sehen ist, wird beim Verschwenken der Schwenkplatten 24, 26 nach außen das zweite Gewebeteil 72 gespannt, bis es sich schließlich annähernd geradlinig zwischen den beiden Fixierungsstellen 74, 76 erstreckt. In diesem Zustand ist die Abdeckung 18, 20 bereits fast vollständig geöffnet, ohne daß der Gassack 14 mit Druckgas beaufschlagt wird, da der zweite Gewebelappen 72 ein Einströmen des vom Gasgenerator 16 bereitgestellten Druckgases durch die Durchgangsöffnungen 32, 34 in den Gassack 14 nicht ermöglicht. Die Arbeitskammer 52 ist in diesem Zustand mittels des ersten Gewebelappens 70 gegenüber den Durchbrüchen 48, 50 in den Seitenwänden des Gehäuses 12 abgedichtet.

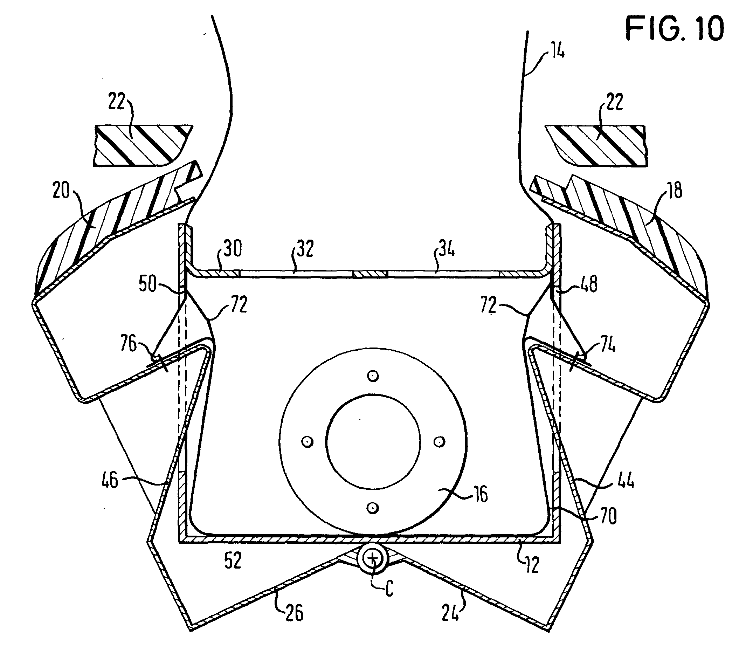

In Figur 10 ist das Gassack-Modul mit vollständig geöffneter Abdeckung 18, 20 und entfaltetem Gassack 14 gezeigt. Das zweite Gewebeteil 72 ist unter der Wirkung des in der Arbeitskammer 52 immer stärker ansteigenden Drucks zerrissen, so daß die Schwenkplatten 24, 26, angetrieben durch den auf ihre Abstützelemente 44, 46 wirkenden Druck im Inneren der Arbeitskammer 52, nach außen verschwenkt wurden. In diesem Zustand sind die Durchbrüche 48, 50 in den Seitenwänden des Gehäuses 12 mittels des ersten Gewebelappens 70 abgedichtet, der sich im oberen Bereich der Durchbrüche ausgehend von der Verbindung zwischen der Trennwand 30 und den Seitenwänden des Gehäuses zu den Fixierungsstellen 74, 76 der Schwenkplatten 24, 26 erstreckt. Ein Austreten des vom Gasgenerator 16 bereitgestellten Druckgases aus dem Gehäuse 12 heraus durch die Durchbrüche 48, 50 hindurch ist auf diese Weise verhindert.

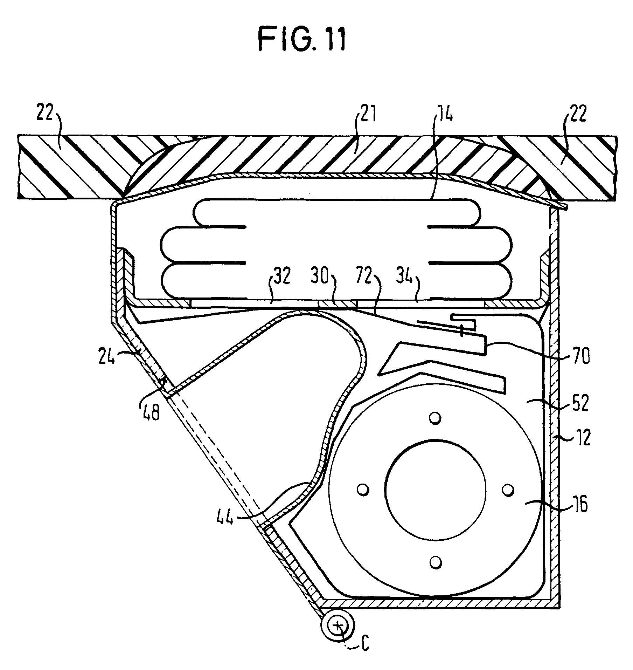

In Figur 11 ist eine vierte Ausführungsform eines erfindungsgemäßen Gassack-Moduls gezeigt. Auch bei dieser Ausführungsform werden lediglich die Unterschiede zu den vorhergehend beschriebenen Ausführungsformen erläutert. Die verschiedenen Bauelemente werden, soweit sie aus den vorangegangenen Zeichnungen bekannt sind, mit denselben Bezugszeichen bezeichnet.

Das Gassack-Modul gemäß der vierten Ausführungsform ist mit einer einteilig ausgebildeten Abdeckung 21 versehen. Für deren schwenkbare Anbringung am Gehäuse 12 wird lediglich eine einzige Schwenkplatte 24 verwendet. Diese ist um eine Schwenkachse C schwenkbar, die in der Mittellängsebene des Gehäuses 12 im Bereich des Bodens angeordnet ist. Der Gasgenerator 16 ist auf der bezüglich Figur 11 rechten Seite des Gehäuses angeordnet, und das an der Schwenkplatte 24 ausgebildete und durch den Durchbruch 48 in das Innere des Gehäuses hineinragende Abstützelement 44 hat auf seiner dem Gasgenerator 16 zugewandten Seite eine an diesen angepaßte Kontur, wobei das Abstützelement 44 auch bei dieser Ausführungsform derart schräg im Inneren des Gehäuses verläuft, daß mit dem zum Gassack 14 hin schiebenden Gewebelappen 70 eine Keilwirkung erzeugt wird. Im Inneren des Gehäuses sind ein erster und ein zweiter Gewebelappen 70, 72 vorgesehen, die zusammen eine Arbeitskammer 52 bilden. Nach Aktivierung des Gasgenerators wird diese Arbeitskammer mit Druckgas beaufschlagt, und die Schwenkplatte 24 wird aufgrund des auf das Abstützelement 44 einwirkenden Drucks nach außen verschwenkt. Dabei taucht die Abdeckung 21 unter dem Armaturenbrett 22 weg.

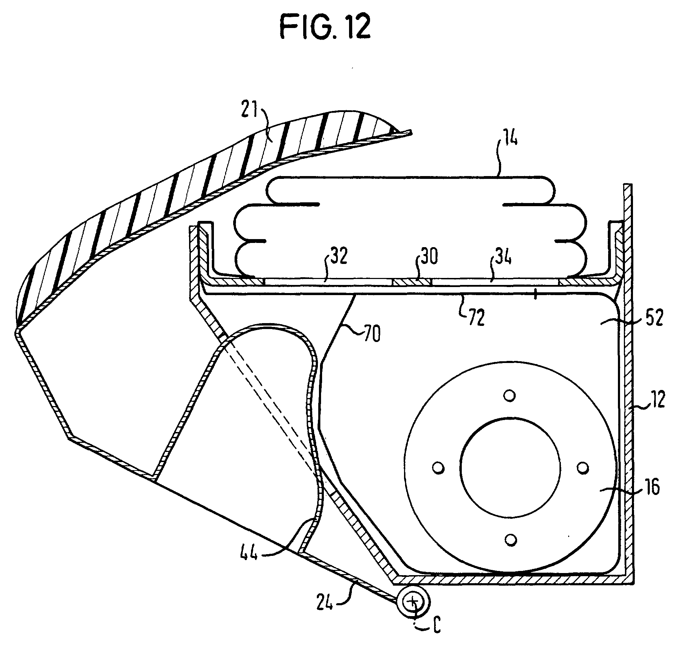

In Figur 12 ist das Gassack-Modul in einem Zustand gezeigt, in welchem die Abdeckung 21 fast vollständig geöffnet ist. In diesem Zustand ist die von dem ersten und dem zweiten Gewebeteil 70, 72 gebildete Arbeitskammer 52 noch abgeschlossen, so daß das vom Gasgenerator 16 bereitgestellte Druckgas nicht durch die Durchgangsöffnungen 32, 34 in den Gassack 14 einströmen und diesen entfalten kann.

Wenn im Inneren der Arbeitskammer 52 ein vorbestimmter Druck überschritten wird, wird das zweite Gewebeteil 72 zerrissen, und das Druckgas kann durch die Durchgangsöffnungen 32, 34 in den Gassack 14 einströmen und diesen entfalten. Das erste Gewebeteil 70 dichtet den Durchbruch 48 in der Seitenwand des Gehäuses 12 ab, so daß das erzeugte Druckgas vollständig zur Befüllung des Gassacks 14 zur Verfügung steht.

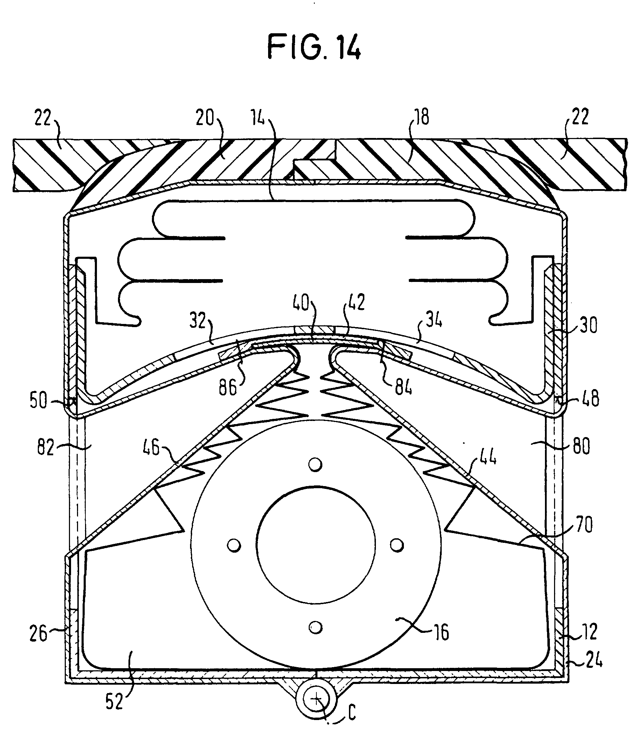

In Figur 14 ist eine fünfte Ausführungsform eines erfindungsgemäßen Gassack-Moduls gezeigt. Auch bei dieser Ausführungsform werden lediglich die Unterschiede zu den vorhergehend beschriebenen Ausführungsformen erläutert. Die verschiedenen Bauelemente werden, soweit sie aus den vorangegangenen Zeichnungen bekannt sind, mit denselben Bezugszeichen bezeichnet.

Das Gassack-Modul gemäß der fünften Ausführungsform ist mit einem Gewebelappen 70 versehen, der zur Abdichtung an den Durchbrüchen 48, 50 dient, durch die hindurch sich die Abstützelemente 44, 46 in das Innere des Gehäuses hinein erstrecken. Die Abstützelemente 44, 46 sind wie bei der dritten Ausführungsform mit einem schräg von den Seitenwänden des Gehäuses 12 in Richtung zum Gassack 14 und zur Mittelebene des Gehäuses hin verlaufenden Abstützbereich für den Gewebelappen 70 versehen. Zur Versteifung der Schwenkplatten 24, 26 sind Versteifungsteile 80, 82 vorgesehen.

An den Abstützelementen 44, 46 sind gekrümmt ausgeführte Schieberelemente 40, 42 vorgesehen, die von dem Gassack-Modul gemäß der zweiten Ausführungsform bekannt sind. Dieses wirken mit der Trennwand 30 zusammen, die ebenfalls gekrümmt ausgebildet ist. Die Schieberelemente 40, 42 sind an der oberen Seite der Abstützelemente 44, 46 der Schwenkplatten 24, 26 mittels einer Fügestelle 84 bzw. 86 befestigt. An dieser Fügestelle ist auch der Gewebelappen 70 an den Schwenkplatten 24, 26 befestigt. Die Fügestellen können durch Niete, Schrauben, Schweißpunkte, etc. in beliebiger, an die auftretenden Belastungen und verwendeten Materialien angepaßter Weise ausgebildet sein. Das Schieberelement 42 liegt im Ruhezustand direkt an der Trennwand 30 an, während das Schieberelement 40 an dem Schieberelement 42 auf dessen von der Trennwand abgewandten Seite anliegt.

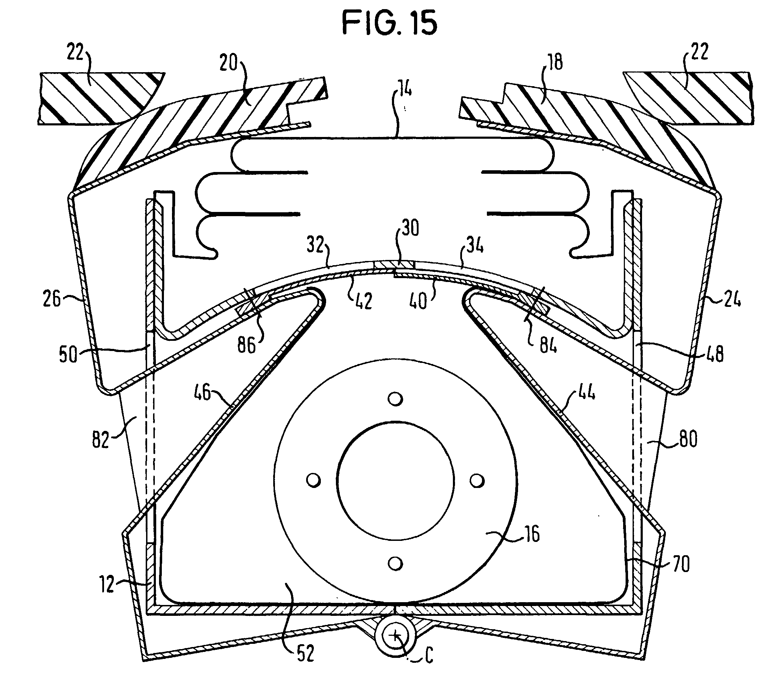

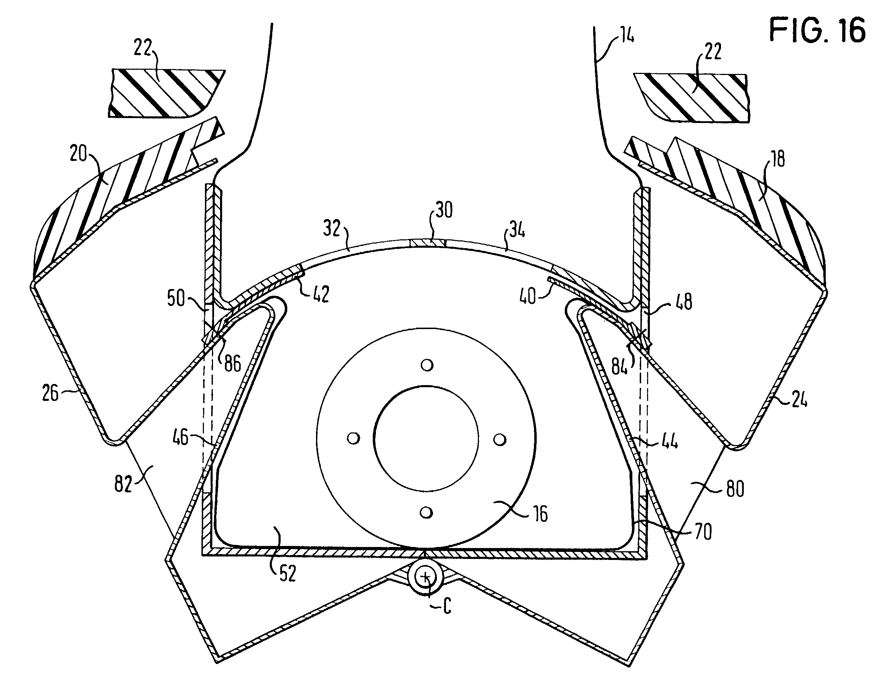

Nach der Aktivierung des Gasgenerators 16 strömt das von diesem bereitgestellte Druckgas zuerst in die Arbeitskammer 52 ein. Diese ist mittels der Schieberelemente 40, 42 dicht abgeschlossen, so daß der Gassack 14 zunächst nicht mit Druckgas beaufschlagt wird. Der Gewebelappen 70 stützt sich an den Abstützteilen 44, 46 ab und drückt diese nach außen, wodurch die Teilelemente 18, 20 der Abdeckung geöffnet werden, bis der in Figur 15 gezeigte Zustand erreicht ist, in dem sich die Vorderränder der Schieberelemente 40, 42 gerade noch berühren. In diesem Zustand, in dem die Abdeckung bereits zu einem großen Teil geöffnet ist, wird der Gassack immer noch nicht mit Druckgas beaufschlagt. Erst wenn die Schwenkplatten 24, 26 und mit diesen die Teilelemente der Abdeckung weiter nach außen geschwenkt werden, geben die Schieberelemente 40, 42 die Durchgangsöffnungen 32, 34 in der Trennwand 30 frei. Der Gassack kann nun mittels des vom Gasgenerator bereitgestellten Druckgases in den Fahrzeuginnenraum hinein entfaltet werden, ohne von der Abdeckung beeinträchtigt zu werden (siehe Figur 16).

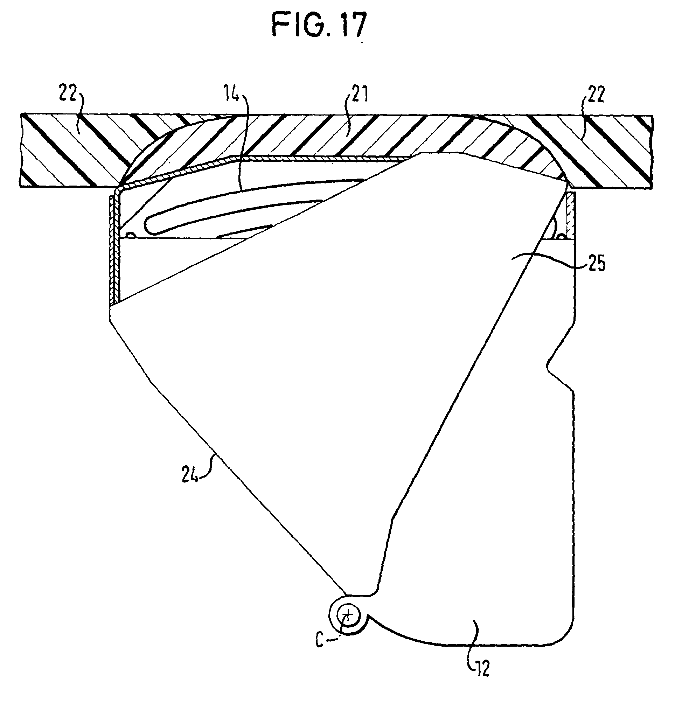

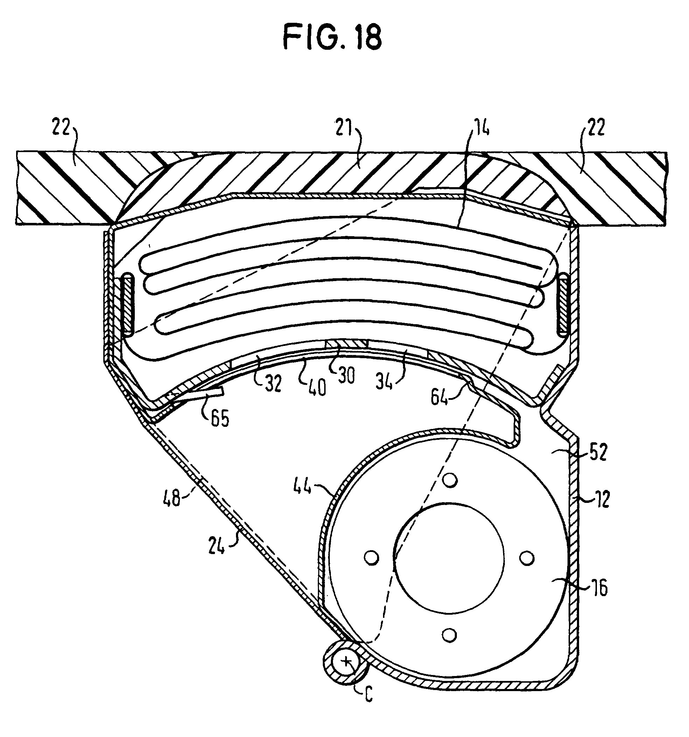

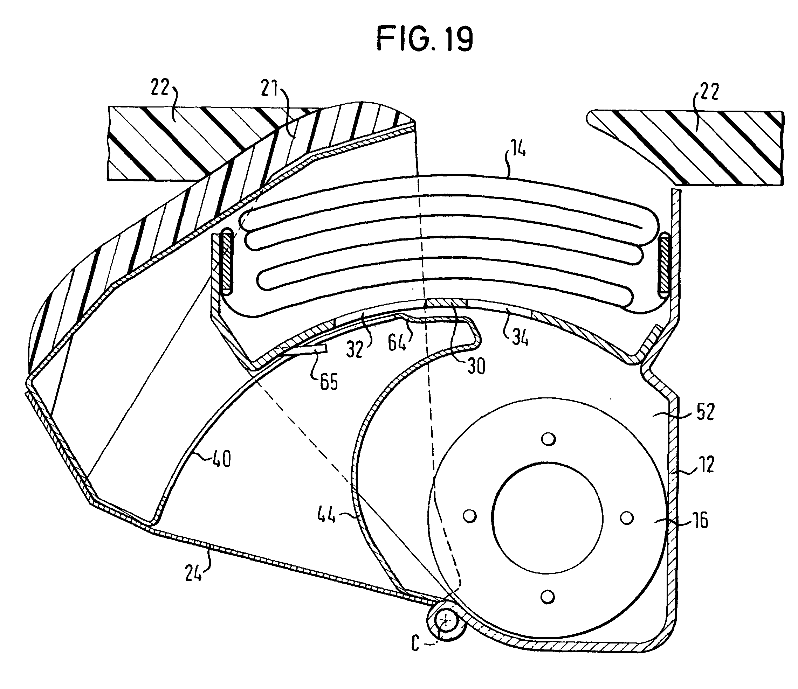

In den Figuren 17 bis 20 ist eine sechste Ausführungsform des Gassack-Moduls gezeigt. Für die Bauteile werden dieselben Bezugszeichen wie bei den vorangegangenen Ausführungsformen verwendet, und hinsichtlich der Funktion dieser Bauteile wird auf die obigen Erläuterungen verwiesen.

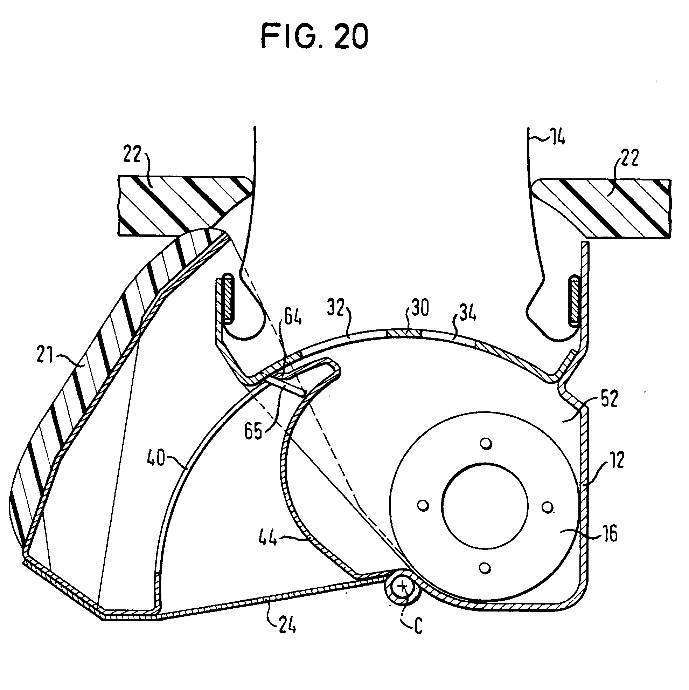

Die sechste Ausführungsform stellt eine Kombination aus der zweiten und der vierten Ausführungsform dar. Es wird eine einzige Schwenkplatte 24 verwendet, an der ein Abstützelement 44 und ein Schieberelement 40 ausgebildet sind. An der Schwenkplatte 24 ist eine einteilig ausgebildete Abdeckung 21 angebracht. Ferner ist die Schwenkplatte mit einem Verstärkungsteil 25 versehen (siehe insbesondere die Seitenansicht von Figur 17). Zur Begrenzung des Schwenkwinkels der Schwenkplatte 24 wird eine Anschlagnase 65 am Gehäuse 12 verwendet, die in einen Schlitz im Abstützelement 44 eingreift und an einem am Ende des Schlitzes ausgebildeten Anschlag 64 angreifen kann. Dies ist in Figur 20 zu sehen, in der das Gassack-Modul mit vollständig nach außen geschwenkter Schwenkplatte 24 und mit entfaltetem Gassack 14 gezeigt ist.

Bei allen gezeigten Ausführungsformen ist das Abstützelement in einem Bereich des Gehäuses 12 angeordnet, in dem vergleichsweise viel Platz zur Verfügung steht. Die Abstützelemente üben jeweils, wenn sie mit dem vom Gasgenerator bereitgestellten Druckgas beaufschlagt werden, eine Kraft auf die Schwenkplatten aus, die zu einem großen Anteil etwa parallel zur Erstreckungsrichtung der Abdeckung ausgerichtet ist. Auf diese Weise wird die Kraft optimal in eine Öffnungsbewegung der Abdeckung umgesetzt. Dies wird unterstützt durch die im Vergleich zu herkömmlichen Gassack-Modulen verbesserten Hebelverhältnisse beim Öffnen der Abdeckung. Bei herkömmlichen Gassack-Modulen wirkt die zum Öffnen der Abdeckung auf diese ausgeübte Kraft mit einem vergleichsweise kleinen Hebelarm auf die Abdeckung ein. Bei dem erfindungsgemäßen Gassack-Modul steht ein größerer Hebelarm zur Verfügung.

## Patentansprüche

1. Gassack-Modul (10) für ein Fahrzeuginsassen-Rückhaltesystem, mit einem Gehäuse (12), einem in diesem angeordneten Gassack (14), einem Gasgenerator (16) zum Befüllen des Gassacks (14) mit Druckgas und einer Abdeckung (18, 20; 21), die das Gehäuse (12) gegenüber dem Fahrzeuginnenraum verschließt und nach Aktivierung des Gasgenerators (16) geöffnet wird, um ein Austreten des Gassacks (14) aus dem Gehäuse (12) zu ermöglichen,
**dadurch gekennzeichnet, daß** ein mit der Abdeckung (18, 20; 21) gekoppeltes, von dieser aber räumlich getrenntes Abstützelement (44, 46) vorgesehen ist, das nach Aktivierung des Gasgenerators (16) einer Kraft ausgesetzt wird, die aus dem vom Gasgenerator (16) erzeugten Druckgas resultiert und die Abdeckung (18, 20; 21) in die geöffnete Stellung beaufschlagt, und daß die Abdeckung (18, 20; 21) mittels einer Schwenkplatte (24, 26) um eine sich in der Längsrichtung des Moduls (10) erstreckende Schwenkachse (C) schwenkbar am Gehäuse (12) angebracht ist.

2. Gassack-Modul nach Anspruch 1, **dadurch gekennzeichnet, daß** die Abdeckung (21) einteilig ausgebildet ist

3. A. Gassack-Modul nach Anspruch 1, **dadurch gekennzeichnet, daß** die Abdeckung aus zwei einander in der geschlossenen Stellung berührenden Teilstücken (18, 20) besteht.

4. Gassack-Modul nach einem der Ansprüche 1 bis 3, **dadurch gekennzeichnet, daß** das Abstützelement (44, 46) an der Schwenkplatte (24, 26) angebracht ist.

5. Gassack-Modul nach einem der Ansprüche 1 bis 3, **dadurch gekennzeichnet, daß** das Abstützelement (44, 46) Teil der Schwenkplatte (24, 26) ist.

6. Gassack-Modul nach Anspruch 1 und einem der Ansprüche 3 bis 5, **dadurch gekennzeichnet, daß** zwei sich jeweils entlang der Längsseiten des Gehäuses (12) erstreckende Schwenkplatten (24, 26) vorgesehen sind.

7. Gassack-Modul nach einem der Ansprüche 1 bis 6, **dadurch gekennzeichnet, daß** die Schwenkplatte (24, 26) außerhalb des Gehäuses (12) angebracht ist und das Abstützelement (44, 46) durch einen Durchbruch (48, 50) in der Wand des Gehäuses (12) in dieses hineinragt.

8. Gassack-Modul nach einem der vorhergehenden Ansprüche, **dadurch gekennzeichnet, daß** zwischen dem Gasgenerator (16) und dem Gassack (14) eine Absperrung (30, 40, 42; 72) vorgesehen ist, die unmittelbar nach Aktivierung des Gasgenerators (16) ein Eintreten des von diesem erzeugten Druckgases in den Gassack (14) verhindert.

9. Gassack-Modul nach Anspruch 8, **dadurch gekennzeichnet, daß** als Teil der Absperrung eine zwischen dem Gasgenerator (16) und dem Gassack (14) angeordnete Trennwand (30) mit mindestens einer Druchgangsöffnung (32, 34) vorgesehen ist und daß die Durchgangsöffnung (32, 34) im Ausgangzustand mit geschlossener Abdeckung (18, 20; 21) verschlossen und im aktivierten Zustand mit geöffneter Abdeckung (18, 20; 21) freigegeben ist.

10. Gassack-Modul nach Anspruch 9, **dadurch gekennzeichnet, daß** ein Schieberelement (40, 42) vorgesehen ist, das zwischen einer die Durchgangsöffnung (32, 34) verschließenden Ausgangsstellung und einer diese freigebenden Aktivierungsstellung verstellbar ist.

11. Gassack-Modul nach Anspruch 10, **dadurch gekennzeichnet, daß** das Schieberelement (40, 42) an einer schwenkbar im Gehäuse (12) angebrachten Schieberplatte (36, 38) angebracht ist, an deren vom Gasgenerator (16) abgewandten Seite sich das Abstützelement (44, 46) abstützt und die zusammen mit dem Gehäuse (12) eine Arbeitskammer (52) bildet, in welcher der Gasgenerator (16) angebracht ist.

12. Gassack-Modul nach Anspruch 10, **dadurch gekennzeichnet, daß** das Schieberelement (40, 42) am Abstützelement (44, 46) angebracht ist.

13. Gassack-Modul nach einem der Ansprüche 10 bis 12, **dadurch gekennzeichnet, daß** ein Abdichtelement (60, 62) vorgesehen ist, das zusammen mit dem Schieberelement (40, 42) eine Arbeitskammer (52) bildet, in welcher der Gasgenerator (16) angeordnet ist.

14. Gassack-Modul nach Anspruch 13, **dadurch gekennzeichnet, daß** das Abdichtelement (60, 62) mit einem Anschlag (64, 66) zum Begrenzen des Verschwenkens der Schwenkplatte (24, 26) versehen ist.

15. Gassack-Modul nach Anspruch 13 oder 14, **dadurch gekennzeichnet, daß** das Abdichtelement (60, 62) in der Ruhestellung dicht am Gasgenerator (16) anliegt.

16. Gassack-Modul nach einem der Ansprüche 13 bis 15, **dadurch gekennzeichnet, daß** das Schieberelement (40, 42), das Abstützelement (44, 46) und das Abdichtelement (60, 62) einstückig miteinander ausgebildet sind und im Querschnitt allgemein U-förmig verlaufen, wobei der eine Schenkel des U-Profils durch das Schieberelement (40, 42), der andere Schenkel durch das Abdichtelement (60, 62) und der Steg durch das Abstützelement (44, 46) gebildet ist.

17. Gassack-Modul nach einem der Ansprüche 10 bis 16, **dadurch gekennzeichnet, daß** das Schieberelement (40, 42) die Durchgangsöffnung (32, 34) erst dann freigibt, wenn die Schieberplatte (36, 38) das Abstützelement (44, 46) und damit die Schwenkplatte (24, 26) so weit verschwenkt hat, daß die Abdeckung (18, 20; 21) mindestens annähernd vollständig geöffnet ist.

18. Gassack-Modul nach einem der Ansprüche 13 bis 17, **dadurch gekennzeichnet, daß** die Trennwand (30), das Schieberelement (40, 42) und das Abdichtelement (60, 62) jeweils mit einer Krümmung ausgeführt sind, deren Krümmungsmittelpunkt wenigstens annähernd mit der Schwenkachse (C) zusammenfällt, so daß das Schieberelement (40, 42) und das Abdichtelement (60, 62) die Abdichtung am Durchbruch (48, 50) im Gehäuse (12) auch während der Schwenkbewegung bewirken.

19. Gassack-Modul nach Anspruch 9, **dadurch gekennzeichnet, daß** die Durchgangsöffnung (32, 34) von einer Berstmembran verschlossen ist.

20. Gassack-Modul nach Anspruch 8 oder 9, **dadurch gekennzeichnet, daß** ein erstes Gewebeteil (70) vorgesehen ist, das am Gehäuse (12) befestigt ist und den Durchbruch (48, 50) in der Wand des Gehäuses (12) abdichtet.

21. Gassack-Modul nach Anspruch 20, **dadurch gekennzeichnet, daß** das erste Gewebeteil (70) sich ausgehend vom Gassack (14) entlang den Seitenwänden und dem Boden des Gehäuses (12) im Inneren des Gehäuses (12) erstreckt.

22. Gassack-Modul nach Anspruch 20 oder 21, **dadurch gekennzeichnet, daß** das erste Gewebeteil (70) einstückig mit dem Gassack (14) ausgebildet ist.

23. Gassack-Modul nach einem der Ansprüche 20 bis 22, **dadurch gekennzeichnet, daß** das erste Gewebeteil (70) an der Schwenkplatte (24, 26) fixiert ist.

24. Gassack-Modul nach einem der Ansprüche 20 bis 23, **dadurch gekennzeichnet, daß** als Teil der Absperrung ein zweites Gewebeteil (72) verwendet wird, das an der Schwenkplatte (24, 26) fixiert ist, zusammen mit dem ersten Gewebeteil (70) eine geschlossene Arbeitskammer (52) bildet und nach Überschreiten eines vorgegebenen Drucks zerreißt, so daß das vom Gasgenerator (16) erzeugte Druckgas durch die Durchgangsöffnung (32, 34) in den Gassack (14) strömen kann.

25. Gassack-Modul nach Anspruch 24, **dadurch gekennzeichnet, daß** das zweite Gewebeteil (72) derart bemessen ist, daß ein vollständiges Öffnen der Abdeckung (18, 20; 21) nicht möglich ist, bevor es zerrissen wird, so daß sich die Schwenkplatte (24, 26) bewegen kann.

26. Gassack-Modul nach Anspruch 8 oder 9, **dadurch gekennzeichnet, daß** ein Steuergassack gebildet ist, der den Gasgenerator (16) umschließt und nach dessen Aktivierung mit Druckgas gefüllt wird und sich mittel- oder unmittelbar an dem Abstützelement (44, 46) abstützt

27. Gassack-Modul nach Anspruch 26, **dadurch gekennzeichnet, daß** der Gassack (14) erst nach dem Steuersack mit dem Druckgas gefüllt wird.

28. Gassack-Modul nach Anspruch 25 oder 26, **dadurch gekennzeichnet, daß** der Steuergassack mit einer Sollbruchstelle versehen ist, die nach Überschreiten eines vorbestimmten Innendrucks zerreißt und ein Füllen das Gassacks (14) ermöglicht.

29. Gassack-Modul nach Anspruch 28, **dadurch gekennzeichnet, daß** die Sollbruchstelle durch eine Reißnaht gebildet ist.

30. Gassack-Modul nach Anspruch 28, **dadurch gekennzeichnet, daß** die Sollbruchstelle durch ein Gewebeteil gebildet ist.

31. Gassack-Modul nach Anspruch 26 und einem der Ansprüche 24 und 25, **dadurch gekennzeichnet, daß** der Steuergassack durch das erste und das zweite Gewebeteil (70, 72) gebildet ist.

32. Gassack-Modul nach einem der Ansprüche 20 bis 31, **dadurch gekennzeichnet, daß** das Abstützelement (44, 46) im Inneren des Gehäuses einen Bereich aufweist, an dem sich das Gewebeteil (70) bzw. der Steuergassack bei Beaufschlagung mit dem Druckgas abstützt und der im Ruhezustand ausgehend von einer Seitenwand des Gehäuses schräg in den Innenraum des Gehäuses (12) hinein in Richtung zum Gassack (14) hin verläuft.

33. Gassack-Modul nach einem der Ansprüche 1 bis 32, **dadurch gekennzeichnet, daß** die Schwenkachse (C) im Bereich des Bodens des Gehäuses (12) angeordnet ist.

34. Gassack-Modul nach einem der Ansprüche 1 bis 33, **dadurch gekennzeichnet, daß** die Schwenkachse (C) in der Mittellängsebene des Gehäuses (12) angeordnet ist.

35. Gassack-Modul nach Anspruch 34, **dadurch gekennzeichnet, daß** die Schwenkplatte (24, 26) einen allgemein U-förmigen Querschnitt hat, wobei ein Schenkel entlang dem Boden des Gehäuses (12) verläuft, der Steg des U-Profils entlang einer Seitenwand des Gehäuses (12) verläuft und der zweite Schenkel sich entlang der dem Fahrzeuginnenraum zugewandten Seite des Gehäuses (12) erstreckt.

36. Gassack-Modul nach einem der Ansprüche 33 bis 35, **dadurch gekennzeichnet, daß** die Abdeckung (18, 20; 21) mit einer Fahrzeugverkleidung (22), unterhalb der das Modul (10) angebracht ist, bündig abschließt, und daß die Abdeckung (18, 20; 21) beim Öffnen unter die Fahrzeugverkleidung (22) wegtaucht.

37. Gassack-Modul nach einem der vorhergehenden Ansprüche, **dadurch gekennzeichnet, daß** das Abstützelement (44, 46) so angeordnet ist, daß es der aus dem vom Gasgenerator (16) erzeugten Druckgas resultierenden Kraft entlang einer Richtung ausgesetzt ist, die zumindest annähernd parallel zur Erstreckungsrichtung der Abdeckung (18, 20; 21) im geschlossenen Zustand ist.

## Claims

1. A gas bag module (10) for a vehicle occupant restraint system, with a housing (12), a gas bag (14) arranged therein, a gas generator (16) to fill the gas bag (14) with compressed gas, and a cover (18, 20; 21) which closes the housing (12) with respect to the interior of the vehicle and is opened after activation of the gas generator (16), in order to enable the gas bag (14) to emerge from the housing (12),
**characterised in that** a support element (44, 46) is provided which is coupled with the cover (18, 20; 21) but spatially separate therefrom, and which after activation of the gas generator (16) is exposed to a force which results from the compressed gas produced by the gas generator (16) and biases the cover (18, 20; 21) towards the opened position, and that the cover (18, 20; 21) is swivellingly mounted on the housing (12) by means of a swivel plate (24, 26) about a swivel axis (C) extending in the longitudinal direction of the module (10).

2. The gas bag module according to Claim 1, **characterised in that** the cover (21) is constructed in one piece.

3. The gas bag module according to Claim 1, **characterised in that** the cover consists of two components (18, 20) touching each other in the closed position.

4. The gas bag module according to any of Claims 1 to 3, **characterised in that** the support element (44, 46) is mounted on the swivel plate (24, 26).

5. The gas bag module according to any of Claims 1 to 3, **characterised in that** the support element (44, 46) is part of the swivel plate (24, 26).

6. The gas bag module according to Claim 1 and any of Claims 3 to 5, **characterised in that** two swivel plates (24, 26) are provided which extend respectively along the longitudinal sides of the housing (12).

7. The gas bag module according to any of Claims 1 to 6, **characterised in that** the swivel plate (24, 26) is mounted outside the housing (12) and the support element (44, 46) projects into the housing (12) through an opening (48, 50) in the wall of the housing (12).

8. The gas bag module according to any of the preceding claims, **characterised in that** between the gas generator (16) and the gas bag (14) a barrier (30, 40, 42; 72) is provided, which immediately after activation of the gas generator (16) prevents the compressed gas produced by the latter from entering into the gas bag (14).

9. The gas bag module according to Claim 8, **characterised in that** as part of the barrier, a dividing wall (30), arranged between the gas generator (16) and the gas bag (14) and having at least one passage opening (32, 34) is provided, and that the passage opening (32, 34) in the initial state is closed with the cover (18, 20; 21) closed and in the activated state is exposed with the cover (18, 20; 21) opened.

10. The gas bag module according to Claim 9, **characterised in that** a slider element (40, 42) is provided, which is movable between an initial position, closing the passage opening (32, 34) and an activating position, exposing it.

11. The gas bag module according to Claim 10, **characterised in that** the slider element (40, 42) is mounted on a slider plate (36, 38) swivellingly mounted in the housing (12), the support element (44, 46) resting against the side of the slider plate (36, 38) facing away from the gas generator (16), and the slider plate (36, 38) together with the housing (12) forming a working chamber (52) in which the gas generator (16) is mounted.

12. The gas bag module according to Claim 10, **characterised in that** the slider element (40, 42) is mounted on the support element (44, 46).

13. The gas bag module according to any of Claims 10 to 12, **characterised in that** a sealing element (60, 62) is provided, which together with the slider element (40, 42) forms a working chamber (52) in which the gas generator (16) is arranged.

14. The gas bag module according to Claim 13, **characterised in that** the sealing element (60, 62) is provided with a stop (64, 66) to limit the swivelling of the swivel plate (24, 26).

15. The gas bag module according to Claim 13 or 14, **characterised in that** the sealing element (60, 62), in the position of rest, lies tightly against the gas generator (16).

16. The gas bag module according to any of Claims 13 to 15, **characterised in that** the slider element (40, 42), the support element (44, 46) and the sealing element (60, 62) are formed in one piece with each other and form an essentially U-shaped cross-section, the one leg of the U-section being formed by the slider element (40, 42), the other leg being formed by the sealing element (60, 62) and the web being formed by the support element (44, 46).

17. The gas bag module according to any of Claims 10 to 16, **characterised in that** the slider element (40, 42) exposes the passage opening (32, 34) only when the slider plate (36, 38) has swivelled the support element (44, 46) and hence the swivel plate (24, 26) so far that the cover (18, 20; 21) is at least approximately fully opened.

18. The gas bag module according to any of Claims 13 to 17, **characterised in that** the dividing wall (30), the slider element (40, 42) and the sealing element (60, 62) are each provided with a curvature, the centre of curvature of which coincides at least approximately with the swivel axis (C), so that the slider element (40, 42) and the sealing element (60, 62) provide the sealing effect at the opening (48, 50) in the housing (12) also during the swivelling movement.

19. The gas bag module according to Claim 9, **characterised in that** the passage opening (32, 34) is closed by a bursting membrane.

20. The gas bag module according to Claim 8 or 9, **characterised in that** a first fabric piece (70) is provided, which is fastened to the housing (12) and seals the opening (48, 50) in the wall of the housing (12).

21. The gas bag module according to Claim 20, **characterised in that** the first fabric piece (70) extends starting from the gas bag (14) along the side walls and the base of the housing (12) inside the housing (12).

22. The gas bag module according to Claim 20 or 21, **characterised in that** the first fabric piece (70) is formed in one piece with the gas bag (14).

23. The gas bag module according to any of Claims 20 to 22, **characterised in that** the first fabric piece (70) is fixed in place at the swivel plate (24, 26).

24. The gas bag module according to any of Claims 20 to 23, **characterised in that** as part of the barrier, a second fabric piece (72) is used, which is fixed in place at the swivel plate (24, 26), forms a closed working chamber (52) together with the first fabric piece (70), and will tear after a predefined pressure is exceeded, so that the compressed gas produced by the gas generator (16) can flow through the passage opening (32, 34) into the gas bag (14).

25. The gas bag module according to Claim 24, **characterised in that** the second fabric piece (72) is dimensioned such that a complete opening of the cover (18, 20; 21) is not possible before the fabric piece (72) is torn, so that the swivel plate (24, 26) can move.

26. The gas bag module according to Claim 8 or 9, **characterised in that** a control gas bag is formed, which surrounds the gas generator (16) and after activation of the latter is filled with compressed gas and rests indirectly or directly against the support element (44, 46).

27. The gas bag module according to Claim 26, **characterised in that** the gas bag (14) is filled with the compressed gas only after the control bag.

28. The gas bag module according to Claim 25 or 26, **characterised in that** the control gas bag is provided with a predetermined breaking point which tears after a predetermined internal pressure is exceeded, allowing the gas bag (14) to be filled.

29. The gas bag module according to Claim 28, **characterised in that** the predetermined breaking point is formed by a tear seam.

30. The gas bag module according to Claim 28, **characterised in that** the predetermined breaking point is formed by a fabric piece.

31. The gas bag module according to Claim 26 and any of Claims 24 and 25, **characterised in that** the control gas bag is formed by the first and the second fabric piece (70, 72).

32. The gas bag module according to any of Claims 20 to 31, **characterised in that** the support element (44, 46) has a region inside the housing against which the fabric piece (70) or respectively the control gas bag rests on pressurisation with the compressed gas and which, in the state of rest and starting from a side wall of the housing, extends obliquely into the interior of the housing (12) towards the gas bag (14).

33. The gas bag module according to any of Claims 1 to 32, **characterised in that** the swivel axis (C) is arranged in the region of the base of the housing (12).

34. The gas bag module according to any of Claims 1 to 33, **characterised in that** the swivel axis (C) is arranged in the central longitudinal plane of the housing (12).

35. The gas bag module according to Claim 34, **characterised in that** the swivel plate (24, 26) has a generally U-shaped cross-section, one leg extending along the base of the housing (12), the web of the U-section extending along a side wall of the housing (12) and the second leg extending along the side of the housing (12) facing the interior of the vehicle.

36. The gas bag module according to any of Claims 33 to 35, **characterised in that** the cover (18, 20; 21) is flush with a vehicle panelling (22), beneath which the module (10) is mounted, and that the cover (18, 20; 21), on opening, dips away under the vehicle panelling (22).

37. The gas bag module according to any of the preceding claims, **characterised in that** the support element (44, 46) is arranged such that it is exposed to the force resulting from the compressed gas produced by the gas generator (16) along a direction which is at least approximately parallel to the direction of extent of the cover (18, 20; 21) in the closed state.

## Revendications

1. Module de coussin à gaz (10) pour un système de retenue d'occupants d'un véhicule, comportant un boîtier (12), un coussin à gaz (14) agencé dans celui-ci, un générateur de gaz (16) pour remplir le coussin à gaz (14) avec du gaz sous pression, et un couvercle (18, 20 ; 21) qui ferme le boîtier (12) par rapport à l'habitacle du véhicule et qui est ouvert après avoir activé le générateur de gaz (16) pour permettre que le coussin à gaz (14) sorte hors du boîtier (12),
**caractérisé en ce qu'**il est prévu un élément de soutien (44, 46) accouplé au couvercle (18, 20 ; 21) mais séparé de celui-ci dans l'espace, lequel est exposé, après avoir activé le générateur de gaz (16), à une force qui résulte du gaz sous pression engendré par le générateur de gaz (16) et qui sollicite le couvercle (18, 20 ; 21) vers la position ouverte, et **en ce que** le couvercle (18, 20 ; 21) est monté pivotant sur le boîtier (12) au moyen d'une plaque de pivotement (24, 26) autour d'un axe de pivotement (C) s'étendant en direction longitudinale du module (10).

2. Module de coussin à gaz selon la revendication 1, **caractérisé en ce que** le couvercle (21) est réalisé d'un seul tenant.

3. Module de coussin à gaz selon la revendication 1, **caractérisé en ce que** le couvercle est constitué par deux parties (18, 20) se touchant mutuellement dans la position fermée.

4. Module de coussin à gaz selon l'une des revendications 1 à 3, **caractérisé en ce que** l'élément de soutien (44, 46) est monté sur la plaque de pivotement (24, 26).

5. Module de coussin à gaz selon l'une des revendications 1 à 3, **caractérisé en ce que** l'élément de soutien (44, 46) fait partie de la plaque de pivotement (24, 26).

6. Module de coussin à gaz selon la revendication 1 et l'une des revendications 3 à 5, **caractérisé en ce qu'**il est prévu deux plaques de pivotement (24,26) s'étendant chacune le long des grands côtés du boîtier (12).

7. Module de coussin à gaz selon l'une des revendications 1 à 6, **caractérisé en ce que** la plaque de pivotement (24, 26) est montée en dehors du boîtier (12) et **en ce que** l'élément de soutien (44, 46) fait saillie dans celle-ci à travers une percée (48, 50) dans la paroi du boîtier (12).

8. Module de coussin à gaz selon l'une des revendications précédentes, **caractérisé en ce qu'**il est prévu entre le générateur de gaz (16) et le coussin à gaz (14) une barrière (30, 40, 42 ; 72) qui empêche, directement après avoir activé le générateur de gaz (16), que le gaz sous pression engendré par celui-ci ne pénètre dans le coussin à gaz (14).

9. Module de coussin à gaz selon la revendication 8, **caractérisé en ce qu'**il est prévu comme partie de la barrière une cloison (30) agencée entre le générateur de gaz (16) et le coussin à gaz (14) et **en ce que** l'ouverture de passage (32, 34) est fermée à l'état initial avec couvercle (18, 20 ; 21) fermé et est libérée à l'état activé avec couvercle (18, 20 ; 21) ouvert.

10. Module de coussin à gaz selon la revendication 9, **caractérisé en ce qu'**il est prévu un élément coulissant (40, 42) qui peut être déplacé entre une position initiale fermant l'ouverture de passage (32, 34) et une position d'activation libérant celle-ci.

11. Module de coussin à gaz selon la revendication 10, **caractérisé en ce que** l'élément coulissant (40, 42) est monté sur une plaque coulissante (36, 38) montée pivotante sur le boîtier (12), sur la face de laquelle, qui est détournée du générateur de gaz (16), l'élément de soutien (44, 46) prend appui et laquelle forme, conjointement avec le boîtier (12), une chambre de travail (52) dans laquelle est monté le générateur de gaz (16).

12. Module de coussin à gaz selon la revendication 10, **caractérisé en ce que** l'élément coulissant (40, 42) est monté sur l'élément de soutien (44, 46)

13. Module de coussin à gaz selon l'une des revendications 10 à 12, **caractérisé en ce qu'**il est prévu un élément d'étanchement (60, 62) qui forme, conjointement avec l'élément coulissant (40, 42), une chambre de travail dans laquelle est agencé le générateur de gaz (16).

14. Module de coussin à gaz selon la revendication 13, **caractérisé en ce que** l'élément d'étanchement (60, 62) est pourvu d'une butée (64, 66) pour limiter le pivotement de la plaque de pivotement (24, 26).

15. Module de coussin à gaz selon la revendication 13 ou 14, **caractérisé en ce que** l'élément d'étanchement (60, 62) repose de manière étanche sur le générateur de gaz (16).

16. Module de coussin à gaz selon l'une des revendications 13 à 15, **caractérisé en ce que** l'élément coulissant (40, 42), l'élément de soutien (44, 46) et l'élément d'étanchement (60, 62) sont réalisés d'un seul tenant les uns avec les autres et s'étendent avec une section transversale en général en forme de U, une des branches du profil en U étant formée par l'élément coulissant (40, 42), l'autre branche par l'élément d'étanchement (60, 62) et la traverse par l'élément de soutien (44,46).

17. Module de coussin à gaz selon l'une des revendications 10 à 16, **caractérisé en ce que** l'élément coulissant (40, 42) ne libère l'ouverture de passage (32, 34) que lorsque la plaque coulissante (36, 38) a fait pivoter l'élément de soutien (44, 46) et par conséquent la plaque de pivotement (24, 26) aussi loin que le couvercle (18, 20 ; 21) est au moins approximativement entièrement ouvert.

18. Module de coussin à gaz selon l'une des revendications 13 à 17, **caractérisé en ce que** la cloison (30), l'élément coulissant (40, 42) et l'élément d'étanchement (60, 62) sont réalisés chacun avec une courbure dont le centre de courbure coïncide au moins approximativement avec l'axe de pivotement (C), de sorte que l'élément coulissant (40, 42) et l'élément d'étanchement (60, 62) provoquent l'étanchement au niveau de la percée (48, 50) dans le boîtier (12) même pendant le mouvement de pivotement.

19. Module de coussin à gaz selon la revendication 9, **caractérisé en ce que** l'ouverture de passage (32, 34) est fermée par une membrane d'éclatement.

20. Module de coussin à gaz selon la revendication 8 ou 9, **caractérisé en ce qu'**il est prévu une première partie de tissu (70) qui est fixée au boîtier (12) et qui rend étanche la percée (48, 50) dans la paroi du boîtier (12).

21. Module de coussin à gaz selon la revendication 20, **caractérisé en ce que** la première partie de tissu (70) s'étend depuis le coussin à gaz (14) le long des parois latérales et du fond du boîtier (12) à l'intérieur du boîtier (12).

22. Module de coussin à gaz selon la revendication 20 ou 21, **caractérisé en ce que** la première partie de tissu (70) est réalisée d'un seul tenant avec le coussin à gaz (14).

23. Module de coussin à gaz selon l'une des revendications 20 à 22, **caractérisé en ce que** la première partie de tissu (70) est fixée à la plaque de pivotement (24, 26).

24. Module de coussin à gaz selon l'une des revendications 20 à 23, **caractérisé en ce qu'**on utilise comme partie de la barrière une deuxième partie de tissu (72) qui est fixée à la plaque de pivotement (24, 26), qui forme, conjointement avec la première partie de tissu (70), une chambre de travail (52) fermée et qui, après avoir dépassé une pression prédéterminée, se déchire de telle sorte que le gaz sous pression engendré par le générateur de gaz (16) peut s'écouler dans le coussin à gaz (14) à travers l'ouverture de passage (32, 34).

25. Module de coussin à gaz selon la revendication 24, **caractérisé en ce que** la deuxième partie de tissu (72) a des dimensions telles qu'une ouverture entière du couvercle (18, 20 ; 21) n'est pas possible avant qu'elle soit déchirée, de sorte que la plaque de pivotement (24, 26) puisse se mouvoir.

26. Module de coussin à gaz selon la revendication 8 ou 9, **caractérisé en ce qu'**il est formé un coussin à gaz de commande qui entoure le générateur de gaz (16) et est rempli de gaz sous pression après l'activation de celui-ci, et qui prend appui directement ou indirectement sur l'élément de soutien (44, 46).

27. Module de coussin à gaz selon la revendication 26, **caractérisé en ce que** le coussin à gaz (14) n'est rempli de gaz sous pression qu'après le coussin de commande.

28. Module de coussin à gaz selon la revendication 25 ou 26, **caractérisé en ce que** le coussin à gaz de commande est pourvu d'un point de rupture qui se déchire après avoir dépassé une pression intérieure prédéterminée et qui permet un remplissage du coussin à gaz (14).

29. Module de coussin à gaz selon la revendication 28, **caractérisé en ce que** le point de rupture est formé par une couture de déchirement.

30. Module de coussin à gaz selon la revendication 28, **caractérisé en ce que** le point de rupture est formé par une partie de tissu.

31. Module de coussin à gaz selon la revendication 26 et l'une des revendications 24 et 25, **caractérisé en ce que** le coussin à gaz de commande est formé par les première et deuxième parties de tissu.

32. Module de coussin à gaz selon l'une des revendications 20 à 31, **caractérisé en ce que** l'élément de soutien (44, 46) à l'intérieur du boîtier présente une région sur laquelle la partie de tissu (70) ou le coussin à gaz de commande prend appui en cas de sollicitation avec du gaz sous pression et qui, à l'état de repos, s'étend depuis une paroi latérale du boîtier en oblique jusque dans l'espace intérieur du boîtier (12) en direction du coussin à gaz (14).

33. Module de coussin à gaz selon l'une des revendications 1 à 32, **caractérisé en ce que** l'axe de pivotement (3) est agencé dans la région du fond du boîtier (12).

34. Module de coussin à gaz selon l'une des revendications 1 à 33, **caractérisé en ce que** l'axe de pivotement (C) est agencé dans le plan longitudinal médian du boîtier (12).

35. Module de coussin à gaz selon la revendication 34, **caractérisé en ce que** la plaque de pivotement (24, 26) a une section transversale en forme générale de U, une branche s'étendant le long du fond du boîtier (12), la traverse du profil en U le long d'une paroi latérale du boîtier (12), et la deuxième branche le long du côté du boîtier (12) qui est tourné vers l'habitacle du véhicule.

36. Module de coussin à gaz selon l'une des revendications 33 à 35, **caractérisé en ce que** le couvercle (18, 20 ; 21) se termine en affleurement avec un revêtement de véhicule (22), en dessous duquel est monté le couvercle (18, 20 ; 21) et **en ce que** lorsqu'on ouvre le couvercle (18, 20 ; 21), celui-ci s'escamote au-dessous du revêtement de véhicule (22).

37. Module de coussin à gaz selon l'une des revendications précédentes, **caractérisé en ce que** l'élément de soutien (44, 46) est agencé de telle sorte qu'il est exposé à la force résultant du gaz sous pression engendré par le générateur de gaz, le long d'une direction qui est au moins approximativement parallèle à la direction d'extension du couvercle (18, 20 ; 21) à l'état fermé.
